# DEMANDE DE BREVET EUROPEEN

(11) **EP 0 997 372 A2**
(43) Date de publication de la demande: **03.05.2000**
(21) Numéro de dépôt: 99410147.5
(22) Date de dépôt: 26.10.1999
(51) Int. Cl.: B62D 55/10

(54) **Véhicule motorisé de neige équipé d'un dispositif de propulsion à chenille.**

(30) Priorité: 26.10.1998 CA 2253197
(71) Demandeur: Bibollet, Jean-Claude, F-74230 Thônes (FR)
(72) Inventeur: Bibollet, Jean-Claude, F-74230 Thônes (FR)
(74) Mandataire: Hecké, Gérard

(57) **Abrégé**

Véhicule motorisé de neige équipé d'un dispositif de propulsion à chenille (5) supporté par un ensemble arrière porteur associé à des moyens de suspension (15, 143), ladite chenille étant entraînée en rotation par au moins une roue d'entraînement (9) accouplée à un moteur (M) par des moyens de transmission, et étant enroulée autour d'une roue arrière (11). Le dispositif de propulsion à chenille (5) est monté à basculement autour d'un axe pivot (6) transversal s'étendant perpendiculairement au plan de symétrie du véhicule, ledit axe pivot étant disposé au voisinage de l'axe de la roue d'entraînement (9) de la chenille (5). Une roue intermédiiare (12) est située entre la roue d'entraînement (9) et la roue arrière (11), et se trouve en engagement avec le brin inférieur interne de la chenille (5) pour assurer le guidage et l'appui de cette dernière lors du mouvement de basculement entre une position abaissée et une position relevée. L'axe de la roue intermédiaire (12) est parallèle à l'axe pivot (6), et se déplace en rotation autour de ce dernier lors dudit mouvement.

## Description

### Domaine technique de l'invention :

La présente invention concerne un véhicule motorisé de neige équipé d'un dispositif de propulsion à chenille supporté par un ensemble arrière porteur associé à des moyens de suspension, ladite chenille étant entraînée en rotation par au moins une roue d'entraînement accouplée à un moteur par des moyens de transmission, et étant enroulée autour d'une roue arrière.

### Etat de la technique :

Les ensembles arrières de propulsion et de suspension équipant les véhicules motorisés de neige actuels donnent globalement satisfaction mais ils restent néanmoins compliqués et donc coûteux à réaliser et d'un poids élevé .

### Objet de l'invention :

L'un des objectifs visés par la présente invention est de proposer un ensemble arrière de suspension et de propulsion qui soit léger, facile à construire donc économique et dont la maintenance soit réduite au minimum

Un objectif complémentaire de cette invention est d'améliorer les performances de confort , de motricité et de tenue latérale de l'arrière du véhicule dans les courbes .

A cet effet , le véhicule motorisé de neige selon l'invention est caractérisé en ce que:
- le dispositif de propulsion à chenille est monté à basculement autour d'un axe pivot transversal s'étendant perpendiculairement au plan de symétrie du véhicule, ledit axe pivot étant disposé au voisinage de l'axe de la roue d'entraînement de la chenille,
- au moins une roue intermédiiare est située entre la roue d'entraînement et la roue arrière, et se trouve en engagement avec le brin inférieur interne de la chenille pour assurer le guidage et l'appui de cette dernière lors du mouvement de basculement entre une position abaissée et une position relevée,
- l'axe de la roue intermédiaire est parallèle à l'axe pivot, et se déplace en rotation autour de ce dernier lors dudit mouvement.

Selon un premier mode de réalisation , l'axe pivot est confondu avec l'axe de la roue d'entraînement de la chenille.

Selon un autre mode de réalisation , l'axe-pivot avant de l'ensemble support chenille est disposé à l'extérieur du périmètre délimité par la chenille et notamment en avant de l'axe de rotation du ou des barbotins avant assurant l'entraînement de la chenille.

Selon un premier mode de réalisation, l'ensemble support de roulement et de guidage de la chenille est constitué par un élément rigide sur toute sa longueur s'étendant longitudinalement de l'avant vers l'arrière depuis l'axe pivot principal par lequel il est relié au châssis du véhicule jusqu'à l'axe de rotation de la roue extrême arrière sur laquelle s'appuie la boucle intérieure arrière de la bande de roulement de la chenille .

Selon un autre mode préférentiel de réalisation l'ensemble support de roulement et de guidage de la chenille est constitué de deux éléments-support disposés dans le prolongement longitudinal l'un par rapport à l'autre de sorte que leurs plans longitudinaux de symétrie respectifs sont coplanaires . Dans ce mode de réalisation, l'élément-support avant s'étend longitudinalement de l'avant vers l'arrière à partir de l'axe-pivot principal par lequel il est relié au châssis du véhicule jusqu'à un axe intermédiaire par lequel il est relié à l'élément - support arrière, tandis que l'élément support arrière s'étend longitudinalement de l'avant vers l'arrière à partir de l'axe -pivot intermédiaire par lequel il est relié à l'élément support avant jusqu'à l'axe de rotation de la roue extrême arrière sur laquelle s'appuie la boucle intérieure arrière de la chenille .

Selon une autre caractéristique , la face longitudinale inférieure de l'ensemble support de la chenille , est de forme polygonale convexe dans le sens longitudinal .

Selon une autre caractéristique , la face longitudinale inférieure de l'ensemble support comporte une roue d'appui positionnée au niveau de l'arête de chacun des dièdres formés par l'intersection de deux facettes d'appui successives de ladite face inférieure longitudinale polygonale convexe . Chacune desdites roues sur lesquelles s'appuie la face intérieure du brin inférieur de la chenille est disposées de façon tangentielle à chacun des deux demi-plans constituant les dièdres susmentionnés .

Selon un autre mode de réalisation , la face inférieure longitudinale de l'ensemble support sur laquelle s'appuie la face intérieure du brin inférieur de la chenille est de forme curviligne convexe dans le sens longitudinal , la convexité étant orientée vers le bas . Selon une variante, ladite convexité s'étend sur le tiers au moins de la longueur totale dudit ensemble support de chenille et le rayon maximum de cette convexité est inférieur à un mètre . Selon un mode de réalisation particulier ce rayon de convexité est compris entre 750 millimètres et 1000 millimètres .

Selon un autre caractéristique , l'ensemble-support de chenille comporte au moins une roue intermédiaire d'appui tournant autour d'un axe perpendiculaire au plan P de symétrie générale du véhicule et positionnée entre l'axe-pivot principal de l'ensemble support chenille et l'axe de rotation de la roue arrière sur laquelle s'appuie la boucle intérieure arrière de la chenille . Ladite roue intermédiaire est située dans le périmètre intérieur délimité par la chenille et elle est dimensionnée et positionnée de telle façon que la face intérieure du brin supérieur de la chenille s'appuie sur une partie de la circonférence supérieure de ladite roue tandis que la face intérieure du brin inférieur de la chenille s'appuie sur une partie de la circonférence inférieure de cette même roue intermédiaire d'appui .

Selon une autre caractéristique importante d'un mode de réalisation préférentiel, l'ensemble-support de roulement et de guidage de la chenille est constitué d'un élément-support avant et d'un élément-support arrière pouvent pivoter l'un par rapport à l'autre autour de l'axe intermédiaire , et comporte au moins une roue intermédiaire d'appui qui est disposée coaxialement avec ledit axe intermédiaire . Une partie de la circonférence de la roue intermédiaire d'appui reste constamment en contact avec la face intérieure du brin inférieur de la chenille tandis qu'une autre partie de la circonférence de la roue intermédiaire d'appui reste constamment en contact avec la face intérieure du brin supérieur de la chenille . Des butées limitent le débattement angulaire de l'élément-support arrière par rapport à l'élément-support avant entre deux positions extrêmes . Dans l'une des positions relevée de l'élément-support arrière , la face intérieure du brin supérieur de la chenille reste tangente en un seul point à la circonférence de la roue intermédiaire et dans l'autre position abaissée de l'élément-support arrière , la face intérieure du brin inférieur de la chenille reste tangente en un seul point à la circonférence de la roue intermédiaire, de sorte que grâce à ce débattement angulaire de l'élément support arrière par rapport à l'élément support avant la face d'appui de la chenille sur la neige peut , dans une certaine mesure , suivre les changements de pente du relief du terrain et ce sans que la tension de la chenille ne se trouve modifiée au cours de ces variations angulaires .

Selon une autre caractéristique , les dimensions respectives de l'élément support avant et de l'élément support arrière sont telles que la distance L2 séparant l'axe intermédiaire de l'axe de la roue arrière est supérieure aux deux tiers de la distance L1 séparant l'axe pivot principal de l'axe intermédiaire.

Selon une autre caractéristique l'ensemble de support et de guidage de la chenille peut pivoter vers le haut en tournant autour de l'axe - pivot principal contre l'action de moyens de suspension et de rappel élastiques .

Selon une autre caractéristique , les moyens suspension et de rappel élastiques sont constitués d'une part par un dispositif principal s'opposant au pivotement vers le haut de l'ensemble support chenille par rapport au châssis du véhicule, et d'autre part par un dispositif secondaire de rappel élastique tendant à augmenter la valeur de l'angle du dièdre , ouvert vers le haut , que forment la face inférieure de l'élément support avant avec la face inférieure de l'élément support arrière .

Selon une autre caractéristique , les moyens de rappel élastiques de l'ensemble support de chenille sont constitués de combinés ressort-amortisseurs dont l'une des extrémités est reliée au châssis du véhicule et dont l'autre extrémité est reliée à l'élément - support arrière de la chenille directement ou par l'intermédiaire de bras ou de biellettes.

Selon une autre variante de réalisation , les moyens de rappel élastiques sont constitués de combinés ressort-amortisseurs dont l'une des extrémités est reliée au châssis du véhicule, et dont l'autre extrémité est reliée à l'élément - support avant de la chenille directement ou par l'intermédiaire de bras ou de biellettes .

Selon une autre caractéristique , les moyens de suspension et de rappel élastiques sont constitués d'un ou de plusieurs combinés ressort-amortisseurs hydrauliques mais il peuvent aussi être constitués d'un dispositif pneumatique ou à gaz, ou encore utiliser les propriétés de déformation élastique de certains matériaux composites , de certains métaux ou de certaines matières telles notamment que le caoutchouc.

Selon une autre caractéristique , les deux flancs de l'ensemble support de chenille sont fermés sur une partie au moins de leur longueur par des panneaux latéraux destinés à s'opposer à l'introduction de neige dans le volume intérieur délimité par la bande de roulement de la chenille . Les faces extérieures de ces panneaux latéraux sont avantageusement disposées sensiblement parallèlement aux plans longitudinaux verticaux passant les bords latéraux extérieurs de la bande de roulement de la chenille et au voisinage immédiat desdits plans latéraux .

Selon une variante d'exécution, les flancs de l'ensemble -support de chenille sont fermés par des panneaux latéraux s'étendant dans le sens longitudinal sur une distance commençant au voisinage immédiat de la face intérieure de la boucle arrière de la chenille et se prolongeant vers l'avant sur les trois quarts au moins de la longueur totale de l'ensemble support de chenille .

Selon une autre caractéristique , les flancs latéraux servent de support de glissement et de guidage aussi bien pour le brin inférieur que pour le brin supérieur de la chenille ainsi que le cas échéant pour la boucle arrière de la chenille .

Selon une autre caractéristique , les panneaux latéraux susmentionnés sont constitués d'une matière offrant un bon coefficient de glissement et une grande résistance à l'abrasion telle que certaines matières plastiques notamment.

Selon une autre variante de réalisation , les panneaux latéraux susmentionnés sont prolongés vers l'arrière, au delà de la face intérieure de la boucle arrière de la chenille , par des flasques décalées latéralement de part et d'autre des bords latéraux de la chenille de telle manière que les faces intérieures desdites flasques s'étendent vers l'arrière , et le cas échéant vers l'arrière et vers le haut , au voisinage immédiat des bords latéraux de la chenille et puissent ainsi servir de guides latéraux s'opposant à ce que la chenille ne sorte de son support de roulement et de guidage et ce particulièrement dans les courbes lorsque l'arrière du véhicule est poussé vers l'extérieur par la force centrifuge .

Selon une autre caractéristique , le dispositif de réglage de la tension de la chenille est situé plus près du barbotin avant assurant l'entraînement de la chenille que de la roue arrière.

Selon une variante de réalisation le dispositif de réglage de la tension de la chenille est situé dans l'élément support avant de manière à ce que l'adaptation de la tension de la chenille soit réalisée en allongeant ou en diminuant la distance séparant l'axe pivot principal de l'axe-pivot intermédiaire sans modifier la distance séparant l'axe pivot intermédiaire de l'axe de la roue extrême arrière . Dans cette configuration , lorsque les flancs de l'élément - support arrière sont entièrement fermés par des panneaux latéraux ceux-ci ne subissent pas les variations de réglages en longueur et ils peuvent ainsi rester positionnés au plus prés possible de la face intérieure de la boucle arrière de la chenille afin de garantir une étanchéité maximale aux pénétrations de neige au niveau de la périphérie de la roue extrême arrière et un guidage optimal de la chenille .

Selon une autre caractéristique , la face de la chenille en contact avec la neige comporte des crampons disposés en rangées transversales par rapport à la chenille. Certaines rangées comportent des crampons plus élevés au centre que sur les bords de la chenille de telle sorte que la ligne qui vient s'appuyer sur les extrémités des crampons d'une telle rangée est de forme générale curviligne dont le rayon **R** est d'une valeur comprise entre 75% et 120 % de la valeur de la largeur **L** de la bande de roulement de la chenille . Selon un mode de réalisation préférentiel de la chenille, la valeur de **R** est comprise entre 125 millimètres et 200 millimètres et la valeur de **L** est comprise entre 150 millimètres et 200 millimètres .

Selon une autre caractéristique , les crampons les plus proéminents disposés dans la zone centrale de la chenille, donc au voisinage du plan P de symétrie générale du véhicule , de deux rangées successives de crampons sont décalés dans le sens latéral les uns par rapport aux autres.

Selon une autre caractéristique , les sommets externes de certains crampons latéraux de la face d'appui de la chenille sur la neige dépassent à l'extérieur des deux plans , parallèles entre eux , passant par les bords latéraux de la bande de roulement de la chenille .

Selon une autre caractéristique , pour certaines rangées au moins ,les crampons sont implantés sur la bande de roulement de la chenille de façon décalée en gradins dans le sens transversal et dans le sens longitudinal tout en restant disposés symétriquement deux à deux par rapport au plan P de symétrie du véhicule de telle sorte qu'en vue en plan les centre des bases desdits crampons ne sont pas alignés dans le sens transversal mais sont situées sur une ligne convexe et constituent des sortes de godets lorsque la bande de roulement de la chenille est vue en plan .

Selon une autre caractéristique les crampons de certaines rangées sont implantés obliquement sur la bande de roulement de la chenille selon une ligne polygonale courbe lorsque la bande de roulement de la chenille est vue en plan

Selon une autre caractéristique les crampons de certaines rangées sont implantés sur la bande de roulement de la chenille selon une ligne polygonale concave dont la concavité est orientée dans le sens de rotation normale de la chenille .

### Description des dessins

D'autres avantages et caractéristiques ressortiront plus clairement des dessins annexés montrant différents modes de réalisation de l'invention , donnés à titres d'exemples non limitatifs , dans lesquels :

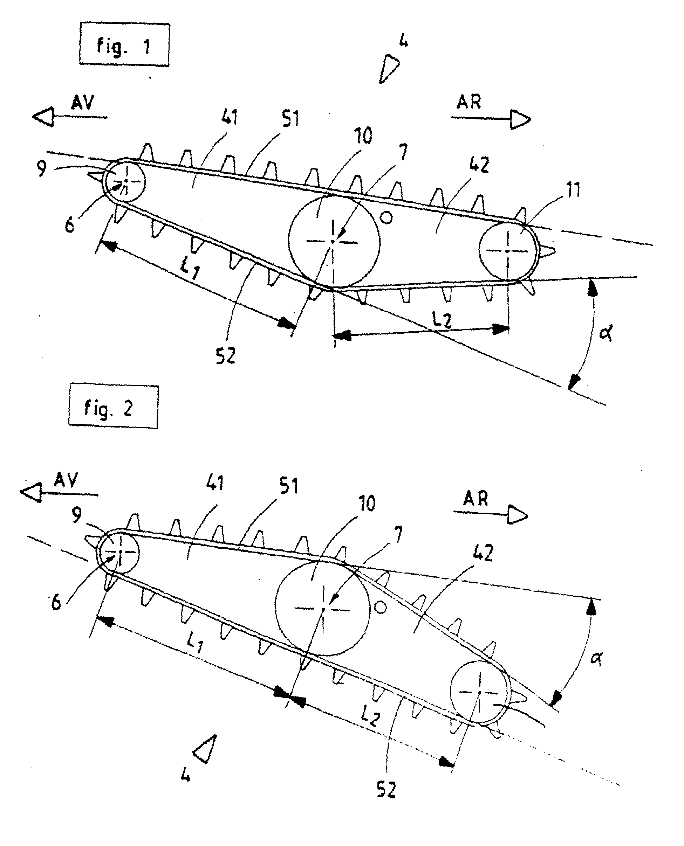

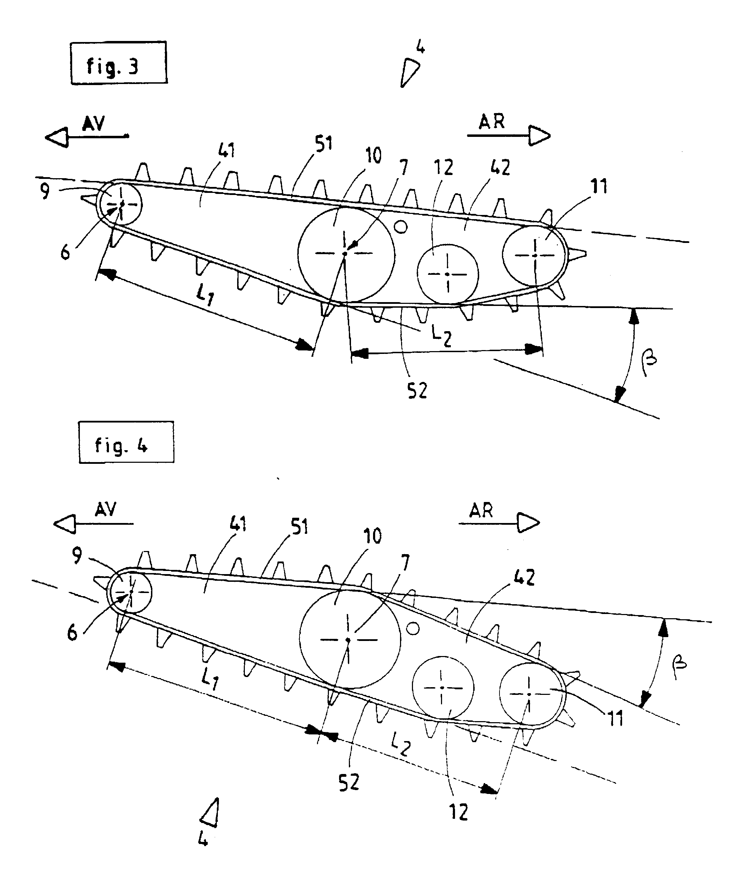

- les figures 1 et 2 montrent de façon schématique , en vue latérale , un premier mode de réalisation d'un ensemble support de chenille selon l'invention comprenant un élément support avant et un élément support arrière représentés dans les deux positions extrêmes ,selon la variation angulaire α que peut occuper l'élément support arrière par rapport à l'élément support avant.

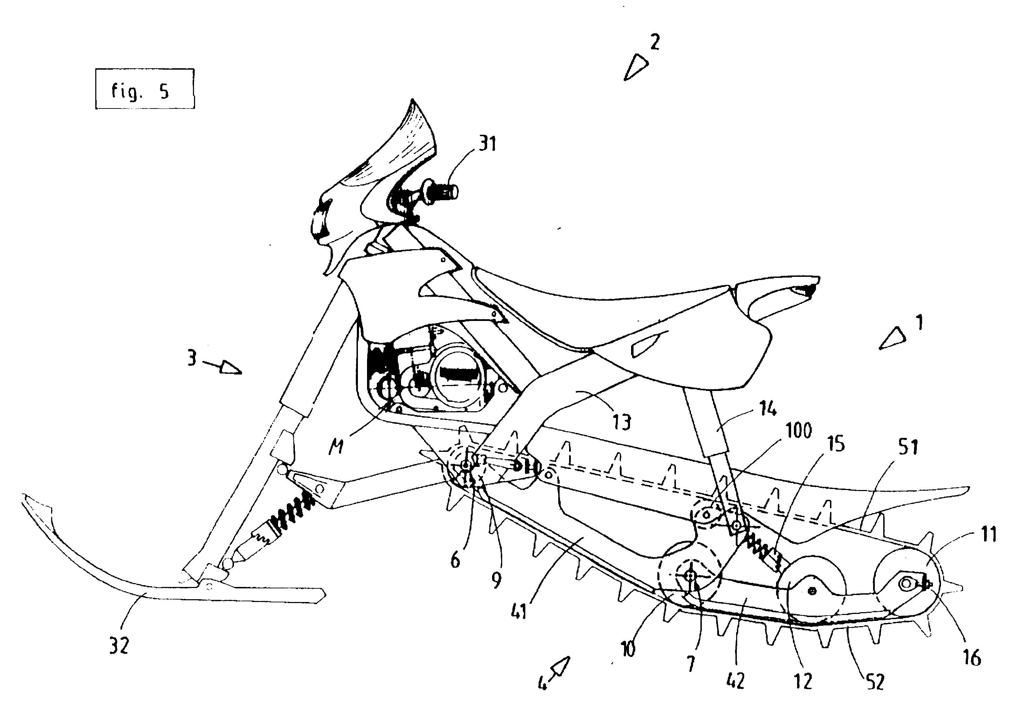

- les figures 3 et 4 montrent de façon schématique , en vue latérale , une variante de réalisation d'un ensemble support de chenille selon l'invention représentant les deux positions extrêmes ,selon la variation angulaire α , que peut occuper l'élément support arrière par rapport à l'élément support avant .
- La vue 5 est une vue latérale d'un véhicule de neige équipé d'un ensemble support de chenille articulé selon l'invention dont les flancs sont ouverts et dont le dispositif principal de suspension et de rappel élastiques exerce son action directement sur l'élément support avant .
- La vue 6 est une vue latérale d'un véhicule de neige équipé d'un ensemble support de chenille articulé selon l'invention dont les flancs sont ouverts et dont le dispositif de suspension et de rappel élastique exerce son action simultanément sur l'élément support avant et sur l'élément support arrière par l'intermédiaire de biellettes disposées en branches de compas .
- La vue 7 est une vue latérale d'un véhicule de neige équipé d'un ensemble support de chenille articulé selon l'invention dont les flancs sont fermés par des panneaux latéraux .
- La vue 8 est une vue latérale d'un véhicule de neige équipé d'un ensemble support de chenille non articulé selon l'invention dont les flancs sont fermés par des panneaux latéraux et dont la face inférieure du support sur laquelle s'appuie le brin inférieur de la chenille est convexe dans le sens longitudinal sur sa partie arrière .
- La figure 9 est vue en coupe selon le repère AA de la figure 7 .
- La figure 10 est une vue partielle en coupe d'une variante de réalisation de la partie arrière de l'ensemble support montré à la figure 9 .
- les figures 11 à 18 montrent un mode de réalisation d'une chenille pouvant être montée sur le support de roulement et de guidage selon l'invention pour constituer un ensemble de propulsion pour véhicule motorisé de neige .

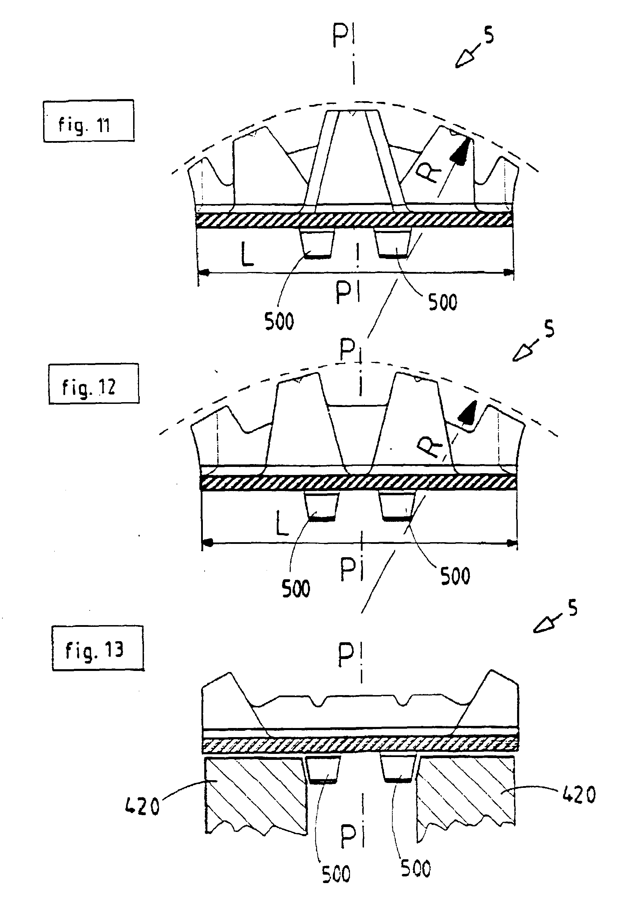

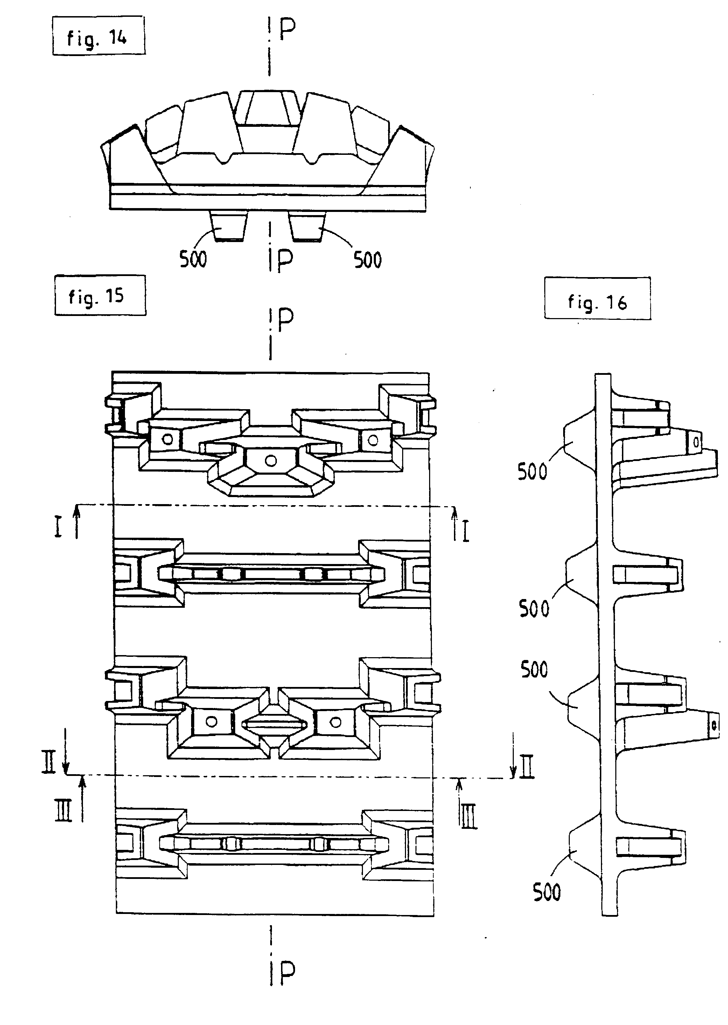

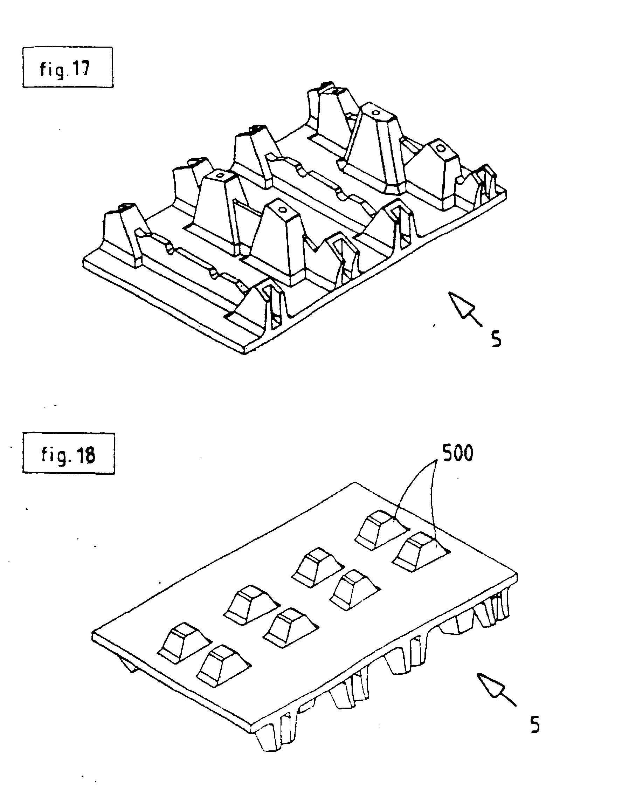

Ainsi :
. la figure 11 est une vue en coupe selon l, l de la figure 15
. la figure 12 est une vue en coupe selon III, III de la figure 15
. la figure 13 est une vue en coupe selon ll, ll de la figure 15
. la figure 14 est une vue en projection frontale de la figure 15 montrant la complémentarité des tailles et des positions des crampons qui constituent les reliefs de la face de la chenille en contact avec la neige .
. la figure 15 est une vue en plan d'une partie de la bande de roulement de la chenille en contact avec la surface de la neige .
. la figure 16 est une vue de coté d'une partie de la chenille .
. la figure 17 est une vue en perspective montrant une partie de la longueur de la face de la chenille en contact avec la neige
. la figure 18 est une vue en perspective montrant une partie de la longueur de la face intérieure de la chenille s'appuyant sur le support de roulement et de guidage . Cette figure montre en particulier les ergots permettant d'une part l'entraînement de ladite chenille par le barbotin d'entraînement avant et permettant d'autre part le guidage latéral de la chenille par les barbotins et par les roues d'appui et de guidage ainsi que par les faces intérieures des panneaux latéraux .

### Description détaillée de différents modes de réalisation :

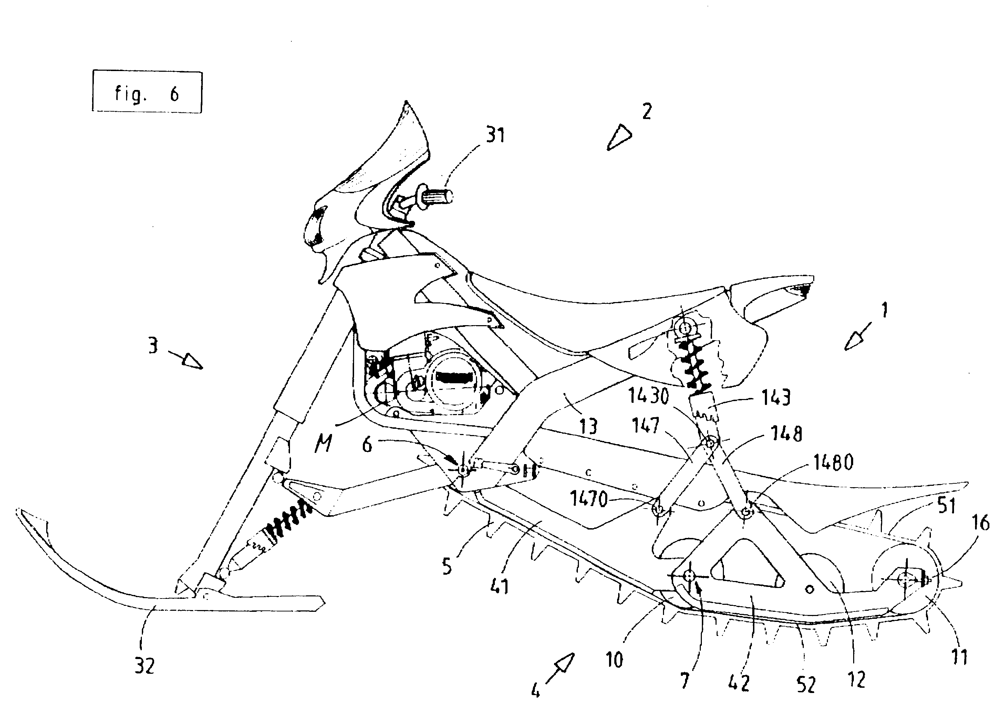

Sur les figures 5 , 6 , 7 , 8 , un dispositif de suspension et de propulsion 1 est installé sur un véhicule de neige 2 comprenant un ensemble avant 3 de direction et de suspension , comportant à son extrémité supérieure un guidon ou assimilé 31 et à son extrémité inférieure un ski 32 .

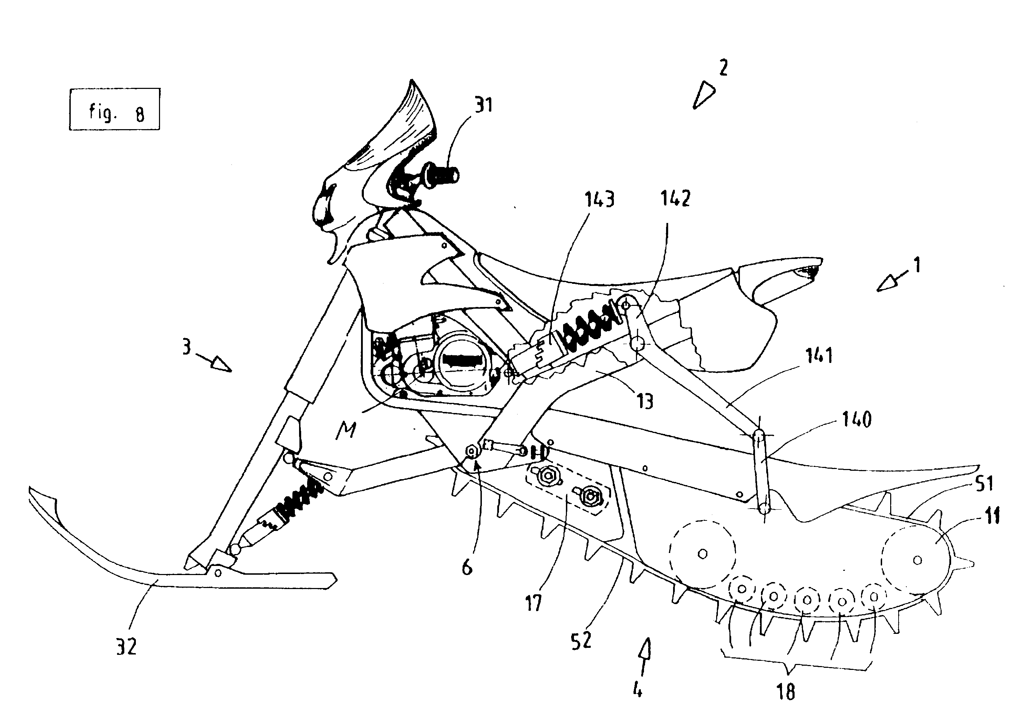

Le dispositif de suspension et de propulsion 1 comporte un ensemble 4 de support et de guidage de la chenille 5 . L'ensemble support 4 autour duquel tourne une chenille 5 , peut être constitué d'un seul élément support rigide tel que représenté sur la figure 8, ou au contraire être constitué de deux éléments articulés entre eux ,un élément support avant 41, et un élément support arrière 42 , tel que représenté notamment sur les figures 5 , 6 , et 7 .

En référence aux figures 1 et 2 , la face intérieure de la chenille 5 s'appuie en s'enroulant sur une partie de la circonférence d'une roue ou d'un barbotin avant 9 assurant l'entraînement en rotation de la chenille 5, et sur une partie de la circonférence d'une roue arrière 11 . Une roue intermédiaire 10 est disposée entre le brin inférieur et le brin supérieur de la chenille 5 . Un dispositif de tension , non représenté sur ces vues , visant à éloigner la roue d'entraînement avant 9 de la roue extrême arrière 11, assure une tension suffisante de la chenille 5 pour que la face intérieure de celle - ci vienne s'appuyer sur les différentes roues 9 , 10 , et 11 .

L'axe pivot principal 6 , disposé coaxialement avec la roue avant 9 , est situé à une distance L1 de l'axe intermédiaire 7 disposé coaxialement avec la roue 10, et l'axe pivot intermédiaire 7 est situé à une distance L2 de l'axe 8 de la roue arrière 11 . Le diamètre de la roue intermédiaire 10 étant supérieur au diamètre de la roue avant 9 et les distances L1 et L2 restant inchangées après que la tension de la chenille ait été réglée , l'élément support arrière 42 peut passer d'une position haute , telle que représentée sur la figure 1, à une position basse , telle que représenté sur la figure 2, en pivotant autour de l'axe 7 selon l'angle β sans que ladite tension de chenille ne soit modifiée en aucun point de ce débattement angulaire β .

La position haute extrême occupée à la figure 1 par l'élément support arrière 42 par rapport à l'élément support avant 41, est atteinte lorsque la face intérieure du brin supérieur 51 de la chenille 5 n'est plus tangente qu'en un seul point à la circonférence de la roue intermédiaire 10, tandis que la face intérieure du brin inférieur 52 de la chenille 5 s'appuie sur la circonférence de la roue intermédiaire 10 . Inversement la position basse extrême occupée à la figure 2 par l'élément support arrière par rapport à l'élément support avant , est atteinte lorsque la face intérieure du brin inférieur 51 de la chenille 5 n'est plus tangente qu'en un seul point à la circonférence de la roue intermédiaire 10 , tandis que la face intérieure du brin supérieur 52 de la chenille 5 s'appuie sur la circonférence de la roue intermédiaire 10 .

Les figures 3 et 4 représentent une variante de réalisation des figures 1 et 2 dans laquelle la face inférieure de l'élément support arrière 42 n'est pas plane comme dans les figures 1 et 2 , mais comporte dans le sens longitudinal deux facettes successives d'appui formant un dièdre ouvert vers le haut, et dont l'arête est disposée perpendiculairement au plan P de symétrie générale du véhicule . Une roue 12 a été disposée entre la roue intermédiaire 10 et la roue extrême arrière 11, de telle manière que sa circonférence est tangente à chacun des deux demi-plans constituant le dièdre susmentionné . En respectant les mêmes conditions que pour les figures 1 et 2, l'élément support arrière 42 peut pivoter par rapport à l'élément support 41 selon un angle α sans que la tension de la chenille 5 ne soit modifiée en aucun point de ce débattement angulaire .

Sur la figure 5 le véhicule de neige 2 comporte un ensemble support 4 de chenille comprenant un élément support avant 41 et un élément support arrière 42 . Une roue 10 ,disposée coaxialement avec l'axe pivot intermédiaire 7 reliant l'élément support arrière 42 à l'élément avant 41 , prend appui sur la face intérieure du brin inférieur 52 de la chenille 5 . La face intérieure du brin supérieur 51 de la chenille 5 s'appuie sur une roue supérieure 100 solidaire de l'élément support avant 41 . Le dispositif principal de suspension 14 exerce son action directement sur l'élément support avant 41 en s'opposant de façon élastique à son pivotement vers le haut autour de l'axe - pivot principal 6, tandis qu'un dispositif secondaire de suspension 15 , constitué ici d'un combiné ressort - amortisseur , s'oppose de façon élastique au pivotement vers le haut autour de l'axe pivot intermédiaire 7 de l'élément support arrière 42 . Dans le mode de réalisation représenté sur cette figure 5 les flancs de l'ensemble support de chenille sont ouverts, et le dispositif 16 de tension de la chenille 5 est situé au niveau de extrémité arrière de l'élément support arrière 42 .

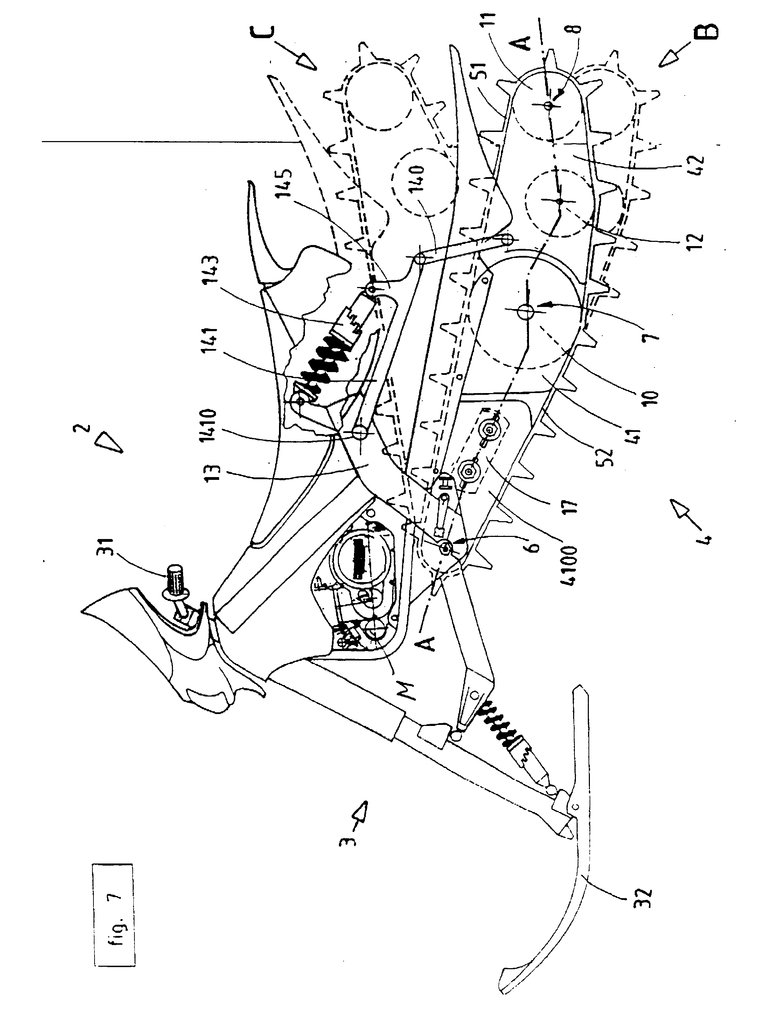

La figure 6 représente une variante qui diffère du mode de réalisation présenté à la figure 5 en ce que le dispositif de suspension est constitué d'un compiné ressort - amortisseur 143 dont l'extrémité supérieure est reliée au châssis 13, et dont l'extrémité inférieure est reliée à des biellettes 147 et 148 disposées en branches de compas . L'extrémité inférieure 1470 de la biellette 147 est reliée de façon pivotante à l'élément support avant 41 et son extrémité supérieure est reliée de façon pivotante à la base du combiné ressort - amortisseur 143 par l'intermédiaire de l'axe 1430 . L'extrémité inférieure 1480 de la biellette 148 est reliée de façon pivotante à l'élément support arrière 42 et son extrémité supérieure est reliée de façon pivotante à la base du combiné ressort - amortisseur 143 par l'intermédiaire de l'axe 1430 . Les biellettes 147 et 148 peuvent pivoter l'une par rapport à l'autre au niveau de l'axe 1430, et les éléments support avant et arrière ,respectivement 41 et 42 , gardent la possibilité de pivoter l'un par rapport à l'autre autour de l'axe intermédiaire 7, tout en étant repoussés tous les deux vers le bas par le combiné ressort - amortisseur 143.

Le dispositif peut comporter un seul combiné ressort amortisseur 143 ou deux combinés ressort amortisseurs disposés côte à côte, et travaillant simultanément ; de même le dispositif comportera avantageusement deux autres biellettes ,identiques aux biellettes 147 et 148 , disposées de l'autre côté de l'ensemble support de chenille 4 et de façon symètrique par rapport au plan P de symétrie générale du véhicule .

La figure 8 montre un autre mode de réalisation dans lequel le véhicule de neige 2 est équipé d'un ensemble support 4 de chenille rigide sur toute sa longueur, et dont la partie inférieure arrière , sur laquelle s'appuie la face intérieure du brin inférieur 52 de la chenille 5 , est de forme curviligne convexe dans le sens longitudinal . La convexité est orientée vers le sol, et le dispositif comporte une pluralité de roues 18 sur lesquelles vient s'appuyer la face intérieure du brin inférieur de la chenille 5 . Les flancs de l'ensemble support de chenille sont fermés par des panneaux latéraux, et le dispositif de tension 17 de la chenille 5 est situé dans le premier tiers avant dudit ensemble support 4 . Le dispositif unique de suspension et de rappel s'opposant de façon élastique au pivotement vers le haut de l'ensemble support 4 de chenille , comprend un bras principal 141 solidarisé au châssis 13 du véhicule 2 par un axe 1410 et relié par l'une de ses extrémités à l'ensemble support 4 de chenille par au moins une biellette articulée 140 . Le bras principal 141 est prolongé au delà de l'axe 1410 par un bras secondaire 142 relié à l'une des extrémités d'un combiné ressort - amortisseur 143 dont l'autre extrémité est reliée au châssis 13 du véhicule 2 .

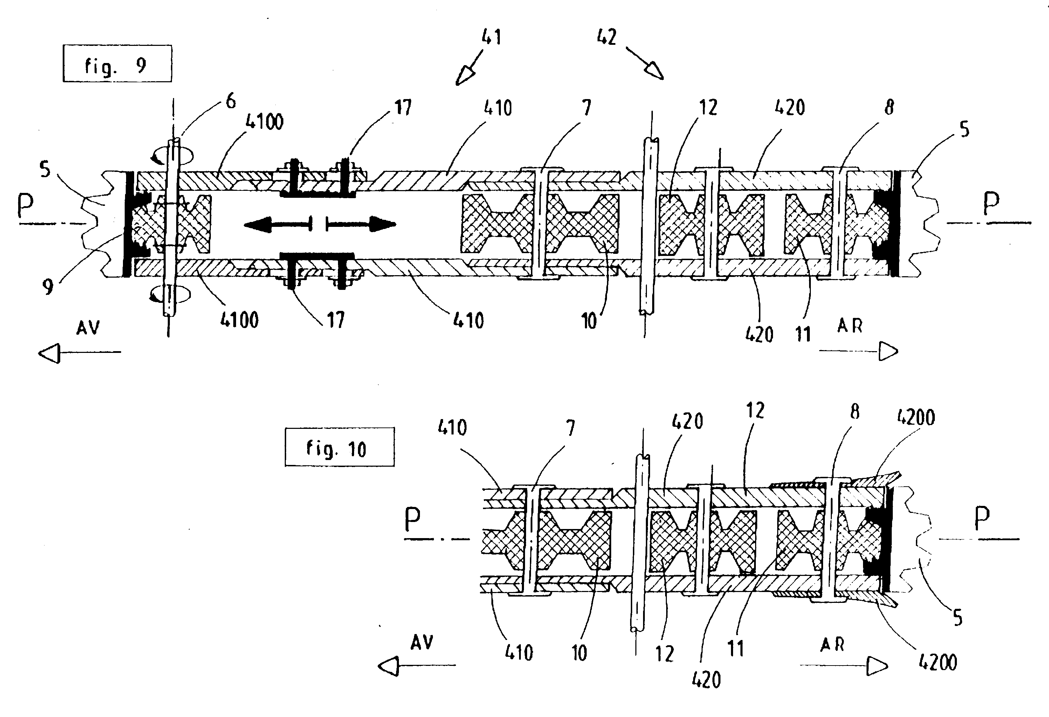

Dans le mode préférentiel de réalisation présenté aux figures 7 et 9 , l'ensemble support 4 de chenille comprend un élément support avant 41 relié au châssis 13 du véhicule 2 par un axe pivot principal 6 disposé coaxialement avec le barbotin d'entraînement 9 , et un élément support arrière 42 relié à l'élément support avant 41 par l'intermédiaire d'un axe pivot intermédiaire 7 . La totalité du débattement de la suspension arrière est représentée sur cette vue . Les contours en traits pointillés repérés B représentent la position la plus basse que peut occuper l'élément support arrière 42 après avoir pivoté au maximum vers le bas par rapport à l'élément support avant 41 selon les conditions décrites pour la figure 4. De même la position extrême haute que peut occuper l'ensemble support de chenille 4 est représentée en traits pointillés sous le repère C, et elle correspond à la fois à la position la plus haute que peut occuper l'élément support avant 41 après pivotement vers le haut autour de l'axe pivot principal 6 , et à la position extrême haute que peut occuper l'élément support arrière 42 après avoir pivoté au maximum vers le haut par rapport à l'élément support avant 41 selon les conditions décrites pour la figure 3. L'élément support avant 41 est fermé sur les côtés par des panneaux latéraux 410, tandis que les côtés de l'élément support arrière 42 sont entièrement fermés par des panneaux latéraux 420 . Au niveau de l'axe pivot intermédiaire 7, la partie arrière des panneaux 410 recouvrent par l'extérieur la partie avant des panneaux latéraux 420 , lesquels sont solidaires de l'élément support arrière 42 et peuvent pivoter autour de l'axe pivot intermédiaire 7 par rapport aux panneaux 410 solidaires de l'élément support avant 41 . Les panneaux latéraux 410 et 420 servent de support de glissement pour la chenille 5, et la distance qui sépare leur faces intérieures ,dans le sens transversal de l'ensemble support 4 de chenille, est calculée pour qu'ils puissent coopérer avec les ergots 500 d'entraînement et de guidage disposés symétriquement sur la face intérieure et dans la zone centrale de la chenille 5. Il en résulte un calage latéral efficace permettant d'assurer le guidage longitudinal de ladite chenille 5 .

Selon une autre caractéristique de ce mode de réalisation représenté sur les figures 7 et 9, le dispositif de tension 17 de la chenille 5 est situé en partie avant de l'élément - support avant 41 . Ce dispositif de tension pourra notamment être constitué de plaques équipées de moyens de serrage permettant d'immobiliser par pincement les panneaux latéraux 410 contre les flasques avant 4100 supportant l'arbre d'entraînement 6 après avoir provoquer un mouvement relatif de coulissement longitudinal en fonction de la tension souhaitée pour la chenille 5 . Le dispositif unique de suspension et de rappel s'opposant de façon élastique au pivotement vers le haut de l'ensemble support 4 de chenille, comprend un bras principal 141 solidarisé au châssis 13 du véhicule 2 par un axe 1410 et relié par l'une de ses extrémités à l'ensemble support 4 de chenille par au moins une biellette articulée 140 . Un bras secondaire 145 , solidaire du bras principal 141 est positionné sur celui - ci entre l'extrémité reliée à l'axe 1410 et l'extremité reliée à la biellette 140 , et est rattachée à un combiné ressort - amortisseur 143 dont l'autre extrémité est reliée au châssis 13 du véhicule 2 .

Selon une première variante de réalisation ,non représentée, le dispositif de suspension et de rappel élastiques représenté sur la figures 7 peut être complété par au moins un combiné ressort - amortisseur dont l'extrémité inférieure est reliée à l'élément support avant, tandis que l'extrémité supérieure dudit combiné ressort - amortisseur est reliée soit au bras principal 141 soit à la biellette 140 . Cette disposition peut être avantageusement équilibrée par un ensemble combiné ressort-amortisseur et biellette disposé de l'autre côté de l'ensemble support 4 de chenille de façon symétrique par rapport au plan P .

Selon une autre variante de réalisation (non représentée) du dispositif de suspension et de rappel de la figures 7, l'extrémité inférieure de la biellette 140 est reliée à l'élément support avant 41, tandis que son extrémité supérieure reste reliée à l'extrémité du bras 141 . Un combiné ressort-amortisseur est relié par son extrémité inférieure à l'élément support arrière 42 et par son extrémité supérieure à la biellette 140 ou à l'extrémité du bras principal 141 . Pour l'équilibrage du dispositif, la biellette 140 et le combiné ressort - amotisseur susmentionnés sont avantageusement complétés par des éléments identiques disposés de façon symétrique de l'autre côté de l'ensemble support 4 de chenille . Toutes ces dispositions peuvent d'une part être combinées avec la disposition du combiné ressort -amortisseur 143 représentée sur la figure 8 et elles peuvent d'autre part coopérer avec des dispositifs utilisant des organes basculeurs et des cames permettant d'optimiser la progressivité de la suspension .

La figure 10 est une vue partielle d'une coupe selon AA de la figure 7 montrant une variante de réalisation de la partie arrière de l'élément support arrière 42 de chenille. Les deux panneaux 420 assurant la fermeture des côtés dudit élément support arrière 42, sont prolongés vers l'arrière par deux flasques latéraux 4200 destinés à empêcher l'échappement de la chenille 5 de l'élément support arrière 42, notamment dans les courbes lorsque l'arrière du véhicule est sollicitée par la force centrifuge .

Les figures 11 à 18 montrent un mode préférentiel de réalisation de la chenille 5 selon lequel pour certaines rangées transversales, les crampons sont de hauteur décroissante dans le sens transversal de la chenille. Les crampons disposés dans la partie centrale de la chenille sont plus élevés que ceux qui sont positionnés au voisinage des bords latéraux de la bande de roulement de la chenille 5 . Les sommets des crampons s'inscrivent dans une ligne courbe dont la convexité est orientée vers l'extérieur , et dont le rayon **R** moyen est compris entre 130 millimètres et 160 millimètres , tandis que la largeur **L** de la bande de roulement de la chenille 5 est comprise entre 150 millimètres et 180 millimètres .

La rangée représentée à la figure 11, comporte trois crampons principaux et deux crampons latéraux secondaires dont les extrémités latérales débordent de part et d'autre de la largeur de la bande de roulement de la chenille 5 . Quatre parois de séparation sont intercalés dans le sens transversal de la chenille entre les cinq crampons .

La rangée représentée à la figure 12 comporte deux crampons principaux et deux crampons latéraux secondaires dont les extrémités latérales débordent de part et d'autre de la largeur de la bande de roulement de la chenille 5 . Trois parois de séparation sont agencées dans le sens transversal de la chenille entre les quatre crampons .

La rangée représentée à la figure 13 comporte deux crampons latéraux principaux privilégiant la retenue latérale de la chenille dans les virages et dans les dévers.

Le nombre différent de crampons pour chacune des rangées représentées aux figures 11 , 12 , 13 et la diversité de formes et de dimensions des crampons permettent de constituer un ensemble ( figure 14) ayant des performances de motricité et de tenue dans le sens latéral .

La figure 15 montre l'implantation en gradins dans le sens latéral et dans le sens longitudinal des crampons permettant ainsi de ménager des redans nécessaires pour assurer un bon accrochage de la chenille 5 dans le sens latéral pour les virages et les dévers .

Les rangées de crampons représentées aux figures 11 et 12 se suivent alternativement sur toute la longueur de la chenille 5 en étant séparée chaque fois par une rangée de crampons telle que celle qui est représentée à la figure 13.
Chacune de ces différentes rangées de crampons est positionnée en vis à vis des ergots 500 d'entraînement et de guidage disposés sur la face intérieure de la chenille 5 comme le montre la figure 16 .

## Revendications

1. Véhicule motorisé de neige équipé d'un dispositif de propulsion à chenille (5) supporté par un ensemble arrière porteur associé à des moyens de suspension (15, 143), ladite chenille étant entraînée en rotation par au moins une roue d'entraînement (9) accouplée à un moteur (M) par des moyens de transmission, et étant enroulée autour d'une roue arrière (11),
caractérisé en ce que:
- le dispositif de propulsion à chenille (5) est monté à basculement autour d'un axe pivot (6) transversal s'étendant perpendiculairement au plan de symétrie du véhicule, ledit axe pivot étant disposé au voisinage de l'axe de la roue d'entraînement (9) de la chenille (5),
- au moins une roue intermédiiare (10, 12, 18) est située entre la roue d'entraînement (9) et la roue arrière (11), et se trouve en engagement avec le brin inférieur interne de la chenille (5) pour assurer le guidage et l'appui de cette dernière lors du mouvement de basculement entre une position abaissée et une position relevée,
- l'axe de la roue intermédiaire (10, 12, 18) est parallèle à l'axe pivot (6), et se déplace en rotation autour de ce dernier lors dudit mouvement.

2. Véhicule motorisé de neige selon la revendication 1, caractérisé en ce que l'axe pivot (6) est confondu avec l'axe de la roue d'entraînement (9) de la chenille (5),

3. Véhicule motorisé de neige selon la revendication 1, caractérisé en ce qu'il comporte deux éléments-support (41, 42) disposés dans le prolongement longitudinal l'un de l'autre, et reliés entre eux par un axe intermédiaire (7), et en ce que la longueur L1 séparant l'axe pivot (6) avant de l'axe intermédiaire (7) et la longueur L2 séparant l'axe intermédiaire (7) de l'axe de la roue arrière (11) sont telles que la longueur L2 est supérieure aux deux tiers de la longueur L1.

4. Véhicule motorisé de neige selon la revendication 1 ou 2, caractérisé en ce que la roue intermédiiare (7) possède une circonférence tangente à la fois avec le brin inférieur et avec le brin supérieur de la chenille (5).

5. Véhicule motorisé de neige selon la revendication 1, caractérisé en ce que la chenille (5) est dotée d'un dispositif de tension situé en partie avant de l'ensemble support de chenille à une distance de l'axe pivot (6) qui est inférieure au tiers de la longueur totale de l'ensemble support de chenille .

6. Véhicule motorisé de neige selon la revendication 1, caractérisé en ce que les flancs du ou des supports de chenille sont fermés par des panneaux latéraux s'étendant à partir de l'intérieur de la boucle arrière intérieure de la chenille (5) en direction de l'avant sur une longueur au moins égale aux deux - tiers de la distance séparant la boucle intérieure arrière de la chenille de la boucle intérieure avant de ladite chenille .

7. Véhicule motorisé de neige selon la revendication 1, caractérisé en ce que la partie inférieure de l'élément support de la chenille (5) est de forme convexe, et comporte au moins trois facettes d'appui dans le sens longitudinal, et en ce que au niveau de chacun des dièdres formés par l'intersection de deux facettes d'appui successives sont positionnées des roues sur lesquelles s'appuie la face intérieure du brin inférieur de la chenille (5), lesdites roues étant disposées de façon tangentielle à chacun des deux demi-plans constituant les dièdres.

8. Véhicule motorisé de neige selon la revendication 1, caractérisé en ce que la partie inférieure de l'ensemble support de la chenille (5) est de forme convexe curviligne dans le sens longitudinal sur le tiers au moins de la longueur totale, et en ce que ladite convexité est orientée vers le sol .

9. Véhicule motorisé de neige selon la revendication 1, caractérisé en ce que la face d'appui de la chenille (5) sur la neige comporte des rangées de crampons disposées transversalement, les crampons situés dans la zone centrale étant d'une hauteur supérieure à celle des autres crampons.

10. Véhicule motorisé de neige selon la revendication 1, caractérisé en ce que la face d'appui de la chenille (5) sur la neige comporte des rangées de crampons implantés symétriquement sur la face extérieure de la bande de roulement de la chenille, et décalés en gradins dans le sens transversal et dans le sens longitudinal .

11. Véhicule motorisé de neige selon la revendication 10, caractérisé en ce que une partie des crampons latéraux débordent des bords latéraux de la bande de roulement de la chenille (5).

12. Véhicule motorisé de neige selon la revendication 1, caractérisé en ce que la largeur hors tout de la chenille (5) est comprise entre 130 et 180 mm, et que les sommets des crampons de certaines rangées s'inscrivent dans une courbe de forme curviligne régulière ou polygonale dont le rayon est compris entre 150 et 300 mm

13. Véhicule motorisé de neige selon la revendication 1, caractérisé en ce que les moyens de suspension sont constitués par un dispositif principal tendant à repousser vers le bas l'ensemble support avant en le faisant pivoter par rapport au châssis du véhicule autour de l'axe pivot (6), et par un dispositif secondaire tendant à repousser vers le bas l'ensemble support arrière en le faisant pivoter par rapport à l'ensemble support avant autour de l'axe intermédiaire (7) .

14. Véhicule motorisé de neige selon la revendication 13, caractérisé en ce que le dispositif principal de suspension comporte un combiné ressort-amortisseur dont l'une des extrémités est reliée au châssis du véhicule, et dont l'autre extrémité est reliée à un maneton solidaire du bras principal de suspension, lequel est lui-même relié à l'ensemble - support de chenille par au moins une biellette .

15. Véhicule motorisé de neige selon la revendication 13, caractérisé en ce que le dispositif principal de suspension comporte un combiné ressort-amotisseur dont l'une des extrémités est reliée au châssis du véhicule, et dont l'autre extrémité est reliée à l'ensemble - support arrière directement ou par l'intermédiaire d'une biellette .
